# FASCICULE DE BREVET EUROPEEN

(11) **EP 1 706 339 B1**
(45) Date de publication et mention de la délivrance du brevet: **07.05.2008**
(21) Numéro de dépôt: 04805809.3
(22) Date de dépôt: 04.11.2004
(51) Int. Cl.: B65G 47/52

(54) **MACHINE DE TRI POSTAL COMPRENANT UNE SOUFFLANTE ENTRE UN SYSTEME D'INJECTION D'ARTICLES DE COURRIER ET UN CARROUSEL D'INJECTION**
POSTSORTIERMASCHINE MIT EINEM GEBLÄSE ZWISCHEN EINEM SYSTEM ZUM ZUFÜHREN VON POSTARTIKELN UND EINEM ZUFÜHRKARUSSELL
MAIL SORTING MACHINE COMPRISING A BLOWER BETWEEN A SYSTEM FOR THE INJECTION OF MAIL ARTICLES AND AN INJECTION CARROUSEL

(30) Priorité: 24.12.2003 FR 0351201
(43) Date de publication de la demande: 04.10.2006
(73) Titulaire: Solystic, 94257 Gentilly (FR)
(72) Inventeur: DELBE, Emmanuel, F-07500 GUILHERAND (FR); CAMPAGNOLLE, Pierre, F-26760 BEAUMONT LES VALENCE (FR)
(74) Mandataire: Prugneau, Philippe
(86) Numéro de dépôt international: PCT/FR2004/050566
(87) Numéro de publication internationale: WO 2005/063599

(56) Documents cités:
- FR-A- 2 795 396
- GB-A- 1 022 824
- US-A- 5 360 316
- US-A- 5 984 303

## Description

L'invention concerne une machine de tri postal comprenant un carrousel, un système d'injection d'articles de courrier sur chant dans des réceptacles du carrousel, chaque réceptacle du carrousel étant défini par une paroi de fond et deux parois latérales, et une soufflante interposée entre le système d'injection et le carrousel.

Une telle machine de tri postal est connue du document US 5,360,316.

Dans une machine de tri postal, plus particulièrement une machine de type "TOP 2000" fabriquée par la société "Solystic", l'injection des articles de courrier se déplaçant sur un convoyeur d'entrée jusque dans un convoyeur de tri est effectuée au moyen d'un carrousel d'injection intermédiaire. Cette opération de transfert des articles de courrier est particulièrement critique pour les performances de la machine de tri. Elle décide de la vitesse du traitement des articles de courrier dans la machine de tri et les articles doivent donc être transférés dans un minimum de temps avec un débit d'injection dans le carrousel d'environ six articles par seconde.

Les articles de courrier traités par cette machine sont principalement des objets plats de toutes sortes, rigides, souples, plastifiés, papier, de largeur comprise entre 90 et 300 mm, de longueur comprise entre 140 et 400 mm, et d'épaisseur allant de 0.2 à 32 mm.

Le document de brevet FR-2795396 décrit une machine de tri postal dans laquelle les articles de courrier sont convoyés sur chant entre deux rangées de roues constituant le système d'injection et envoyés en sortie des rangées de roue dans les réceptacles du carrousel. Ce système d'injection permet de réguler la vitesse d'injection des articles de courrier dans les réceptacles. Les articles de courrier sont déplacés sur chant dans les réceptacles du carrousel avant de tomber par gravité verticalement sur chant dans des godets d'un convoyeur de tri synchronisé avec le carrousel.

L'utilisation d'un tel système d'injection d'articles de courrier dans les réceptacles du carrousel n'est satisfaisante que pour les articles de courrier rigides, lourds et de grande taille.

En effet, les articles de courrier souples s'avachissent entre les parois du réceptacle. De plus, l'envoi des articles à grande vitesse dans les réceptacles du carrousel provoque sous l'effet des frottements engendrés par la vitesse et du choc contre les parois la déformation des articles faiblement rigides. Enfin le brassage de l'air dû à la rotation du carrousel ainsi que la compression de l'air causée par la variation de l'écart entre les parois des réceptacles pendant la rotation du carrousel provoquent des perturbations de l'air ambiant dans la zone d'injection des articles qui modifient la trajectoire de certains articles de courrier légers.

La déformation des articles de courrier et la modification de leur trajectoire lors de leur injection dans les réceptacles du carrousel sont les principales causes d'arrêt des machines et de rejet des articles de courrier du convoyeur de tri, qui ralentissent le fonctionnement de la machine de tri et nécessitent l'intervention d'opérateurs.

Un article de courrier mal injecté dans le réceptacle du carrousel, c'est à dire n'étant pas disposé sur chant au fond du réceptacle correspondant à sa position d'entrée, ne tombe pas verticalement droit dans le godet correspondant du convoyeur de tri mais s'étale par exemple à plat sur la surface de plusieurs godets ou tombe dans un autre godet avec un autre article de courrier. Les articles de courrier mal introduits dans les godets du convoyeur de tri sont détectés et rejetés ou sont enlevés à l'aide d'une brosse d'éjection lorsque les articles sont à cheval sur plusieurs godets.

Ces problèmes d'injection se traduisent par un fort taux d'articles de courrier non présents dans les godets du convoyeur de tri et qui doivent être traités manuellement.

Le dispositif d'injection des articles de courrier du convoyeur d'entrée vers le carrousel intermédiaire présenté ci-dessus ne permet pas de satisfaire les exigences attendues des utilisateurs de machines de tri postal, car jusqu'à 2% des articles de courrier sont mal injectés.

Le but de l'invention est de remédier aux inconvénients présentés ci-dessus en proposant une machine de tri postal dans laquelle on a des moyens améliorés pour amener et maintenir les articles de courrier en position droite verticale au fond des réceptacles du carrousel.

A cet effet, l'invention a pour objet une machine de tri postal comprenant un carrousel, un système d'injection d'articles de courrier sur chant dans des réceptacles du carrousel, chaque réceptacle du carrousel étant défini par une paroi de fond et deux parois latérales, et une soufflante interposée entre le système d'injection et le carrousel, caractérisée en ce que la soufflante comprend deux jets d'air comprimé sensiblement perpendiculaires entre eux, chaque article de courrier étant déplacé entre les deux jets d'air. Avec cet agencement l'article de courrier est guidé depuis sa sortie du système d'injection le long de la seconde paroi latérale d'un réceptacle du carrousel jusqu'à la paroi de fond de ce réceptacle.

Selon un mode de réalisation particulier de la machine de tri selon l'invention, un déflecteur souple est fixé sur une première des parois latérales de chaque réceptacle de manière que chaque article de courrier injecté dans le réceptacle est guidé vers la paroi de fond en étant sensiblement plaqué contre la seconde paroi latérale. Avec cet agencement les articles de courrier sont guidés et maintenus dans les réceptacles et ne s'avachissent pas.

La machine de tri selon l'invention peut présenter en outre les particularités suivantes :
- le déflecteur souple est une large bande de courroie renforcée avec une toile;
- chaque jet d'air comprimé est un jet d'air comprimé plat envoyé au moyen d'une ou plusieurs buses plates;
- la pression des jets d'air comprimé est comprise entre 0,5 et 1,5 bar (liée au type de soufflante).

Un exemple de réalisation d'une machine de tri postal selon l'invention est décrit ci-après en détail et illustré sur les dessins.
La figure 1 est une représentation très schématique en vue de dessus d'un carrousel et d'un système d'injection d'articles de courrier.
La figure 2 est une représentation schématique en vue de dessus de la zone d'injection d'articles de courrier dans un carrousel d'une machine de tri selon l'invention.
La figure 3 montre schématiquement en vue de côté un réceptacle muni d'un déflecteur d'une machine de tri selon l'invention.
La figure 4 montre schématiquement en vue de côté l'agencement des soufflantes d'une machine de tri selon l'invention.

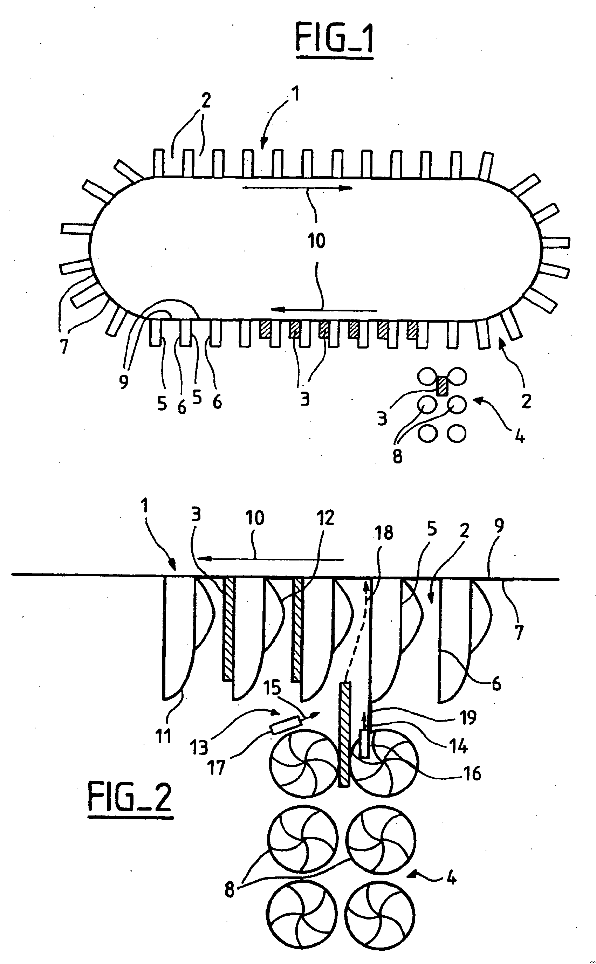

Sur la figure 1, on a représenté un carrousel 1 intermédiaire d'une machine de tri postal non représentée, muni de réceptacles 2 et servant au transfert des articles de courrier 3 provenant d'un convoyeur d'entrée vers un convoyeur de tri non représentés. Pour effectuer ce transfert, les articles de courrier 3 déplacés sur chant sont envoyés au moyen d'un système d'injection 4 dans les réceptacles 2 ouverts étant chacun formé de deux parois latérales 5, 6 et d'une paroi de fond 7 opposée à la position du système d'injection 4.

Le système d'injection 4 est formé de deux rangées de roues 8 élastiquement déformables qui permettent de ralentir les articles de courrier 3 pour limiter l'intensité des chocs des articles de courrier 3 contre les parois lors de leur injection dans les réceptacles 2, de contrôler et de synchroniser l'injection des articles de courrier 3 dans le carrousel 1. Les rangées de roues 8 sont constituées de deux niveaux de roues superposés. La paroi de fond 7 est montée sur un amortisseur 9 ce qui permet d'absorber le choc de l'article de courrier 3 envoyé à grande vitesse dans le réceptacle 2 et d'éviter la dégradation de l'article. Ce système d'injection 4 est décrit en détail dans le document de brevet FR-2795396.

Les réceptacles 2 du carrousel 1 se déplacent et tournent dans le sens représenté par les flèches 10. Les articles de courrier 3 disposés sur chant entre les parois 5, 6 des réceptacles 2 glissent et avancent avec les réceptacles 2 jusqu'à une ouverture dans la platine dans laquelle ils tombent verticalement par gravité dans des godets du convoyeur de tri, le convoyeur de tri non représenté étant agencé en dessous du carrousel 1. Pour tomber de manière adéquate dans les godets du convoyeur de tri, il est nécessaire que les articles de courrier 3 soient préalablement positionnés verticalement sur chant dans les réceptacles 2.

Comme visible sur la figure 1, le carrousel 1 suit un trajet fermé de forme ovale. L'écart entre les parois 5, 6 d'un réceptacle est supérieur dans la partie courbe à celui dans la partie droite du trajet. Il en résulte une compression de l'air et donc des perturbations de l'air en sortie de partie courbe, à l'endroit où est disposé le système d'injection 4 (à la sortie d'une partie courbe).

Dans la suite de la description, la paroi latérale 5 dont le dos est orienté dans le sens de la marche du carrousel 1 est désignée comme étant la première paroi latérale 5 tandis que celle lui faisant face est désignée comme étant la deuxième paroi latérale 6.

Sur la figure 2, on montre de manière schématique la zone d'injection des articles de courrier 3 dans le carrousel 1 d'une machine de tri selon l'invention. Le système d'injection 4 des articles de courrier 3 tel que décrit précédemment envoie les articles de courrier 3 vers le carrousel 1 selon une direction longitudinale, perpendiculaire au mouvement représenté par la flèche 10 des réceptacles 2 du carrousel 1 dans la zone d'injection. Les réceptacles 2 du carrousel 1 sont tous agencés de la même façon. Dans la zone d'injection, les parois latérales 5, 6 des réceptacles 2 sont sensiblement parallèles selon ladite direction longitudinale et perpendiculaires à la paroi de fond 9.

La première paroi latérale 5 comporte un arrondi 11, ouvert vers l'extérieur à l'entrée du réceptacle 2 et recouvert d'une matière plastique glissante pour guider les articles de courrier 3 vers le fond du réceptacle 2 si la trajectoire des articles de courrier 3 est déviée et que ces derniers ne sont pas envoyés au centre du réceptacle 2 mais viennent buter contre l'arrondi 11.

Comme visible sur la figure 2, un déflecteur souple 12 est fixé sur la première paroi latérale 5. Le déflecteur souple 12 est par exemple une large bande de caoutchouc renforcée avec une toile (tapis) ou une large courroie plate agencée entre la paroi de fond 9 et l'arrondi 11 et avançant dans le réceptacle 2.

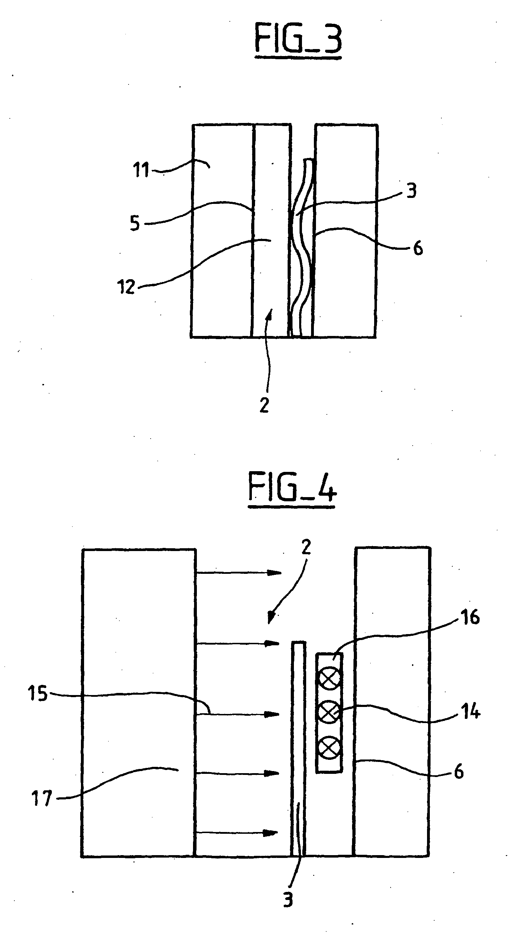

Sur la figure 3, on observe que l'ajout du déflecteur souple 12 dans le réceptacle 2 permet de restreindre sur toute la hauteur du réceptacle 2 l'écart entre les deux parois latérales 5, 6 qui était de 70 mm. L'écart entre le déflecteur souple 12 et la seconde paroi latérale 6 n'est plus que d'environ 25 mm. Le déflecteur souple 12 permet ainsi de guider les articles 3 vers la paroi de fond 9 en restant sensiblement plaqués contre la seconde paroi latérale 6 mais surtout comme on peut le voir sur la figure 3 de maintenir verticalement sur toute leur hauteur les articles de courrier 3 souples ou peu rigides sensiblement plaqués contre la seconde paroi latérale 6 et de guider leur chute dans les godets du convoyeur de tri non représenté. Les articles de courrier 3 souples se gondolent entre le déflecteur 12 et la seconde paroi latérale 6 mais ne s'avachissent pas.

Il résulte de la souplesse du déflecteur 12 que les articles 3 rigides et / ou épais ne sont pas gênés pour passer entre la seconde paroi latérale 6 et le déflecteur 12. De plus, le déflecteur souple 12 peut s'écraser et ne coince pas les articles de courrier 3 épais de sorte qu'il ne perturbe pas leur chute dans les godets du convoyeur de tri non représenté.

L'intégration d'un déflecteur souple 12 dans chaque réceptacle 2 du carrousel 1 est facile et peu onéreuse.

Dans la figure 2, on observe encore dans la zone d'injection une soufflante 13 interposée entre le système d'injection 4 et le carrousel 1. Cette soufflante 13 est composée de deux jets 14, 15 d'air comprimé plats sensiblement perpendiculaires entre eux ou présentant un angle légèrement obtus entre eux et envoyés au moyen de buses plates 16, 17.

Un jet 14 appliqué selon ladite direction longitudinale en direction du carrousel 1 entre l'article de courrier 3 et la seconde paroi latérale 6 du réceptacle 2 correspondant permet par effet "venturi" de dévier la trajectoire des articles de courrier 3 souples vers la seconde paroi 6. Sous l'effet de ce jet 14 d'air comprimé, l'article de courrier 3 est attiré vers la seconde paroi latérale 6 puis poussé le long de la paroi jusqu'à la paroi de fond 9. La trajectoire de l'article de courrier 3 est représentée par la flèche en pointillé 18 dans la figure 2. On dispose une plaque de référence 19 parallèlement à l'article de courrier 3, du côté opposé à l'article de courrier 3 par rapport au jet 14, laquelle plaque 19 fermera l'espace entre la tête de la buse 16 et l'extrémité ouverte des réceptacles 2 ou on minimise la distance entre la tête de la buse 16 envoyant le jet 14 longitudinalement et l'extrémité ouverte des réceptacles 2, de manière à bien maîtriser la direction du jet 14 et à limiter les perturbations de l'air.

Un autre jet 15 d'air comprimé est envoyé sensiblement parallèlement en sens inverse du mouvement des réceptacles 2 sur l'article de courrier 3. Le jet 15 exerce alors une pression sur l'article de courrier 3, plus particulièrement la partie arrière de l'article de courrier 3 lorsque l'article de courrier 3 est relâché par les roues 8 du système d'injection 4, et le dévie sur la seconde paroi latérale 6.

Il en résulte que la soufflante 13 améliore le guidage des articles de courrier 13 dès leur sortie du système d'injection 4 et pâlie aux fortes perturbations d'air engendrées par le mouvement et le resserrement des parois 5, 6 avant la zone d'injection. Ainsi, la trajectoire 18 des articles de courrier 3 légers et / ou souples est maîtrisée et les articles de courrier 3 sont guidés correctement dans le réceptacle 2.

On observe en vue de côté sur la figure 4 l'agencement des soufflantes 13 dans la machine de tri. Le jet 15 d'air comprimé plat est envoyé par une ou plusieurs buses plates 17 sur une partie ou toute la hauteur du réceptacle 2. Le jet 14 d'air comprimé plat est envoyé par une buse plate 16 sur la partie centrale du réceptacle 2 car la buse plate est insérée entre les deux niveaux superposés de roues 8. A cette fin, on peut utiliser une ou plusieurs buses plates 16, 17 alignées par exemple du type "727ABS" de la société "Windjet" ou du type "921" de la société "Silvent".

Les jets 14, 15 d'air comprimé sont appliqués de manière continue tant que le carrousel 1 est en mouvement. On peut appliquer des pressions de jet d'air allant de 0.5 à 1.5 bar, mais on utilise préférablement une pression de un bar déterminée par essais et produisant un effet de collage optimum de l'article de courrier 3 contre la seconde paroi 6 du réceptacle 2.

Dans les machines de tri postal de type "TOP 2000" l'espacement entre le système d'injection 4 et le carrousel 1 est suffisant pour y intégrer la soufflante 13.

Les déflecteurs 12 ainsi que la soufflante 13 peuvent être agencés individuellement ou simultanément dans la machine de tri selon l'invention. La combinaison des deux techniques améliore les performances du transfert des articles de courrier du convoyeur d'entrée au convoyeur de tri d'un facteur supérieur à trente. Avec cet agencement, on arrive à abaisser à environ 0,06% le nombre d'articles présentant un défaut d'injection dans le carrousel, ce qui permet de répondre aux exigences actuelles des utilisateurs de machines de tri et aussi d'élargir l'éventail des articles à traiter.

Il est évident que l'invention n'est nullement limitée au mode de réalisation qui vient d'être décrit mais s'étend à toute variante faisant partie du domaine de protection de l'invention tel que défini par les revendications.

## Revendications

1. Machine de tri postal comprenant un carrousel (1), un système d'injection (4) d'articles de courrier (3) sur chant dans des réceptacles (2) du carrousel (1), chaque réceptacle (2) du carrousel (1) étant défini par une paroi de fond (7) et deux parois latérales (5, 6) et une soufflante (13) interposée entre le système d'injection (4) et le carrousel (1), **caractérisée en ce que** la soufflante (13) comprend deux jets (14, 15) d'air comprimé sensiblement perpendiculaires entre eux, chaque article de courrier (3) étant déplacé entre les deux jets d'air (14, 15).

2. Machine de tri postal selon la revendication 1, dans laquelle un déflecteur souple (12) est fixé sur une première des parois latérales (5) de chaque réceptacle de manière que chaque article de courrier (3) injecté dans le réceptacle (2) est guidé vers la paroi de fond (7) en étant sensiblement plaqué contre la seconde paroi latérale (6).

3. Machine de tri postal selon la revendication 2, dans laquelle le déflecteur souple (12) est une large bande de courroie renforcée avec une toile.

4. Machine de tri postal selon l'une des revendications précédentes, dans laquelle chaque jet (14, 15) d'air comprimé est un jet d'air comprimé plat envoyé au moyen d'une ou plusieurs buses plates (16, 17).

5. Machine de tri postal selon l'une des revendications précédentes, dans laquelle la pression des jets (14, 15) d'air comprimé est comprise entre 0,5 et 1,5 bar.

## Claims

1. A postal sorting machine comprising a carousel (1), a system (4) for injecting mail items (3) edge on into receptacles (2) of the carousel (1), each receptacle (2) of the carousel (1) being defined by an end wall (7) and two side walls (5, 6), and a blower (13) interposed between the injection system (4) and the carousel (1), the machine being **characterized in that** the blower (13) comprises two jets (14, 15) of compressed air substantially perpendicular to each other, each mail item (3) being displaced between the two jets (14, 15) of air.

2. A postal sorting machine according to claim 1, in which a flexible deflector (12) is fixed on a first one of the side walls (5) of each receptacle in such a manner that each mail item (3) injected into the receptacle (2) is guided towards the end wall (7) while being pressed substantially against the second side wall (6).

3. A postal sorting machine according to claim 2, in which the flexible deflector (12) is a wide strip of belt reinforced with cloth.

4. A postal sorting machine according to any preceding claim, in which each jet (14, 15) of compressed air is a flat jet of compressed air delivered by means of one or more flat nozzles (16, 17).

5. A postal sorting machine according to any preceding claim, in which the pressure of the jets (14, 15) of compressed air lies in the range 0.5 bars to 1.5 bars.

## Patentansprüche

1. Postsortiermaschine, umfassend ein Karussell (1), ein Einspeisesystem (4) für Sendungsartikel (3) auf deren Kante in Behältnisse (2) des Karussells (1), wobei jedes Behältnis (2) des Karussells (1) definiert ist durch eine Bodenwandung (7) und zwei seitliche Wandungen (5, 6), und ein Gebläse (13), welches zwischen dem Einspeisesystem (4) und dem Karussell (1) angeordnet ist, **dadurch gekennzeichnet, dass** das Gebläse (13) zwei Druckluftstrahlen (14, 15) umfasst, die im Wesentlichen quer zueinander angeordnet sind, wobei jeder Sendungsartikel (3) zwischen den beiden Druckluftstrahlen (14, 15) verlagert wird.

2. Postsortiermaschine nach Anspruch 1, in der ein nachgiebiger Deflektor (12) auf einer ersten der seitlichen Wandungen (5) jedes Behältnisses derart fixiert ist, dass jeder in das Behältnis (2) eingespeiste Sendungsartikel (3) zu der Bodenwandung (7) geführt und hierbei im Wesentlichen gegen die zweite seitliche Wandung (6) gedrückt wird.

3. Postsortiermaschine nach Anspruch 2, in welcher der nachgiebige Deflektor (12) ein breiter Gurtstreifen ist, der mit einem Gewebe verstärkt ist.

4. Postsortiermaschine nach einem der vorhergehenden Ansprüchen, in welcher jeder Druckluftstrahl (14, 15) ein flacher Druckluftstrahl ist, der mittels einer oder mehrerer flacher Düsen (16, 17) erzeugt wird.

5. Postsortiermaschine nach einem der vorhergehenden Ansprüchen, in welcher der Druck der Druckluftstrahlen zwischen 0,5 und 1,5 bar ausmacht.
